# FASCICULE DE BREVET EUROPEEN

(11) **EP 3 135 547 B1**
(45) Date de publication et mention de la délivrance du brevet: **15.08.2018**
(21) Numéro de dépôt: 16180787.0
(22) Date de dépôt: 22.07.2016
(51) Int. Cl.: B60S 1/38

(54) **ELÉMENT DE SUPPORT, BALAI D'ESSUIE-GLACE ET ESSUIE-GLACE DE VÉHICULE AUTOMOBILE**
HALTEELEMENT, SCHEIBENWISCHERBLATT UND SCHEIBENWISCHER EINES KRAFTFAHRZEUGS
SUPPORT ELEMENT, WIPER BLADE AND WINDSCREEN WIPER OF A MOTOR VEHICLE

(30) Priorité: 24.08.2015 FR 1557869
(43) Date de publication de la demande: 01.03.2017
(73) Titulaire: Valeo Systèmes d'Essuyage, 78322 Le Mesnil Saint Denis (FR)
(72) Inventeur: POTON, Eric, 63430 Pont du Château (FR); JOMARD, Olivier, 63170 AUBIERE (FR); GAUCHER, Vincent, 63720 ENNEZAT (FR); Houssat, Stéphane, 63112 BLANZAT (FR)
(74) Mandataire: Callu Danseux, Violaine

(56) Documents cités:
- EP-A1- 1 829 758
- FR-A1- 2 905 650
- US-A1- 2014 224 901

## Description

L'invention concerne un élément de support pour balai d'essuie-glace de véhicule automobile. L'invention concerne également un balai d'essuie-glace incorporant un tel élément de support et un essuie-glace de véhicule automobile comprenant ledit balai d'essuie-glace.

Un élément de support (par exemple une vertèbre de rigidification), une lame d'essuyage et un support du balai sont des composants du balai qui sont d'orientation principale longitudinale. L'élément de support et la lame sont introduits en coulissement longitudinal dans des conduits longitudinaux complémentaires du support. Le blocage longitudinal de l'élément de support et de la lame dans les conduits du support est réalisé par des embouts d'extrémités montés sur chaque extrémité du balai. Chaque embout est réalisé de manière à être verrouillé sur l'extrémité associée de l'élément de support.

De manière conventionnelle, le verrouillage de l'embout en position engagée sur l'élément de support est réalisé par l'intermédiaire d'une encoche réalisée dans un bord longitudinal de la vertèbre, recevant un organe de verrouillage associé.

Les deux extrémités de l'élément de support comportent chacune une encoche, et les deux encoches sont réalisées dans un même bord longitudinal de l'élément de support. Ainsi, il est connu de réaliser chaque embout en fonction de l'extrémité du balai sur laquelle l'embout est destiné à être monté. De ce fait, les deux embouts qui doivent être montés sur un balai sont différents, ce qui pose des problèmes d'augmentation du nombre d'appareillages utilisés pour réaliser les composants du balai.

On connait aussi du document FR 2 922 502, un embout d'extrémité ayant deux moyens de verrouillage réalisés de manière symétrique de sorte que l'embout d'extrémité soit apte à être monté indifféremment sur l'une ou l'autre des deux extrémités de l'élément de support. Le balai comporte alors deux embouts d'extrémité identiques qui sont montés sur chacune de ses extrémités. Toutefois, ces embouts d'extrémité à verrouillage symétrique sont complexes à réaliser et donc coûteux. En effet, le moulage de deux moyens de verrouillage qui doivent tous deux être flexibles et opérationnels implique des moules et des opérations de moulage compliqués, que l'invention décrite ci-dessous simplifie.

Un but de la présente invention est donc de simplifier les balais d'essuie-glaces de l'art antérieur.

A cet effet, la présente invention a pour objet un élément de support élastique allongé pour balai d'essuie-glace destiné à être inséré dans un support de balai d'essuie-glace, l'élément de support élastique allongé étant formé d'un seul tenant entre deux extrémités longitudinales et par lequel passe un plan longitudinal médian, l'élément de support élastique allongé comprenant des moyens de verrouillage chacun destiné à coopérer avec un organe de verrouillage complémentaire porté par le balai d'essuie-glace et dont au moins un moyen de verrouillage est ménagé à chaque extrémité longitudinale de l'élément de support élastique allongé, caractérisé en ce que les moyens de verrouillage comprennent une unique encoche de verrouillage par extrémité longitudinale, une première encoche de verrouillage s'étendant d'un côté du plan longitudinal médian et une deuxième encoche de verrouillage s'étendant de l'autre côté du plan longitudinal médian.

L'embout d'extrémité peut ainsi présenter un unique organe de verrouillage et être monté indifféremment sur l'une ou l'autre des deux extrémités de l'élément de support élastique allongé. L'embout d'extrémité est ainsi le même pour les deux extrémités longitudinales du balai d'essuie-glace. Le balai d'essuie-glace de l'invention est alors reconnaissable par le fait que l'embout d'extrémité est de conception identique, c'est-à-dire par exemple issu d'un même moule.

Des embouts d'extrémité identiques qui peuvent être montés sur une extrémité longitudinale quelconque du balai d'essuie-glace, réduit le nombre d'appareillages utilisés pour réaliser les composants du balai d'essuie-glace.

De plus, un embout d'extrémité présentant un unique organe de verrouillage est plus simple à réaliser et donc moins couteux qu'un embout de l'art antérieur ayant des moyens de verrouillage symétriques.

L'élément support élastique allongé est par exemple une ou plusieurs vertèbres de rigidification, une monture de support du balai ou une combinaison de cette vertèbre de rigidification logée dans cette monture de support.

Selon un exemple de réalisation, le positionnement des encoches de verrouillage vis-à-vis de l'élément de support confère à l'élément de support élastique allongé une symétrie centrale par rapport à un centre de l'élément de support élastique allongé. Il existe au moins une diagonale passant par un même point de chacune des encoches de verrouillage et qui passe par le centre de l'élément de support.

Selon une variante de réalisation, au moins une des encoches de verrouillage est ménagée sur un des bords latéraux délimitant l'élément de support élastique allongé. On comprend ici que l'encoche de verrouillage débouche au niveau du bord latéral longitudinal qui délimite la vertèbre. Cette encoche de verrouillage est ainsi ouverte sur le côté longitudinal de la vertèbre. Bien entendu, l'invention couvre le cas où les deux uniques encoches de verrouillage sont ménagées débouchant sur le bord latéral concerné de l'élément de support.

De manière alternative, au moins une des encoches de verrouillage est délimitée par un bord circonférentiel fermé. L'encoche de verrouillage est alors par exemple un trou à périmètre fermé, décalé latéralement vers ou dans l'intérieur de la vertèbre de rigidification. Ici aussi, l'invention couvre le cas où les deux uniques encoches de verrouillage sont à périmètre fermé.

Dans un cas comme dans l'autre, l'encoche de verrouillage peut être traversante de l'élément de support.

Selon une possibilité de l'invention, au moins une des encoches de verrouillage est en intersection avec le plan longitudinal médian. Bien que formées de part et d'autre du plan longitudinal médian à chaque extrémité longitudinale respective de la vertèbre, l'encoche de verrouillage peut chevaucher le plan longitudinal médian.

Les extrémités longitudinales de la vertèbre de rigidification peuvent être chanfreinées, pour faciliter l'introduction de la vertèbre de rigidification dans l'embout d'extrémité et/ou le support du balai.

L'invention a aussi pour objet un balai d'essuie-glace caractérisé en ce qu'il comporte un élément de support élastique allongé selon l'une quelconque des définitions ci-dessus. Préférablement, le balai d'essuie-glace selon l'invention comprend un unique élément de support élastique allongé selon l'une quelconque des définitions ci-dessus, plus préférablement logé dans une monture de support du balai d'essuie-glace. Cette dernière conception, avantageuse, permet de réduire le nombre de pièces du balai et donc son coût unitaire.

Le balai d'essuie-glace selon l'invention peut comprendre l'une quelconque des caractéristiques ci-dessous, prise seule ou en combinaison :
- dans un tel balai d'essuie-glace, il est prévu au moins un embout d'extrémité porteur de l'organe de verrouillage complémentaire du moyen de verrouillage ménagé sur l'élément de support élastique allongé,
- l'embout d'extrémité comporte un logement recevant l'extrémité longitudinale de l'élément de support, l'organe de verrouillage faisant saillie sur un côté du logement pour coopérer avec l'encoche de verrouillage de l'élément de support pour verrouiller cet élément de support en position engagée dans le logement,
- l'organe de verrouillage de l'embout d'extrémité comporte une unique languette élastique ; en d'autres termes, l'embout d'extrémité comporte une unique languette élastique de verrouillage,
- la languette élastique se déplace dans un plan sensiblement perpendiculaire au plan longitudinal médian,
- la languette élastique se déplace dans un plan sensiblement parallèle au plan longitudinal médian,
- le logement de l'embout d'extrémité comporte une ouverture ménagée au droit de l'organe de verrouillage,
- un même balai d'essuie-glace comprend deux embouts d'extrémité chacun rapporté à une extrémité longitudinale de l'élément de support, les embouts d'extrémité étant de conception identique,
- l'embout d'extrémité est obtenu par moulage,
- l'organe de verrouillage de l'embout d'extrémité est débrayable pour permettre un démontage de l'embout d'extrémité d'avec l'extrémité longitudinale du balai d'essuie-glace.

L'invention a encore pour objet un essuie-glace caractérisé en ce qu'il comporte un balai d'essuie-glace tel que décrit précédemment et un bras d'actionnement pour entrainer le balai d'essuie-glace en pivotement.

D'autres caractéristiques et avantages de l'invention ressortiront de la description suivante, donnée à titre d'exemple, sans caractère limitatif, en regard des figures annexées sur lesquelles :
- La figure 1 est une représentation schématique en perspective d'un balai d'essuie-glace relié à un bras d'entrainement d'essuie-glace,
- La figure 2 est une vue en éclaté de l'essuie-glace de la figure 1,
- La figure 3 est une vue en perspective de l'élément de support allongé élastique ou vertèbre de rigidification du balai d'essuie-glace de la figure 1,
- Les figures 3a et 3b sont des vues schématiques illustrant différents modes de réalisation du moyen de verrouillage,
- La figure 4 est une vue partielle d'un support du balai ou monture de support du balai et d'un déflecteur d'air assemblés à un élément de support allongé élastique du balai ou vertèbre de rigidification,
- La figure 5 représente les éléments de la figure 4 assemblés à une lame d'essuyage,
- La figure 6 représente les éléments de la figure 5 assemblés à un embout d'extrémité,
- La figure 7 représente une vue en perspective et de face de l'embout d'extrémité de la figure 6,
- La figure 8 représente une vue de dessous de l'embout d'extrémité de la figure 7, et
- La figure 9 représente une vue analogue à la figure 8 avec une extrémité longitudinale d'un élément de support allongé élastique ou vertèbre de rigidification insérée dans l'embout d'extrémité.

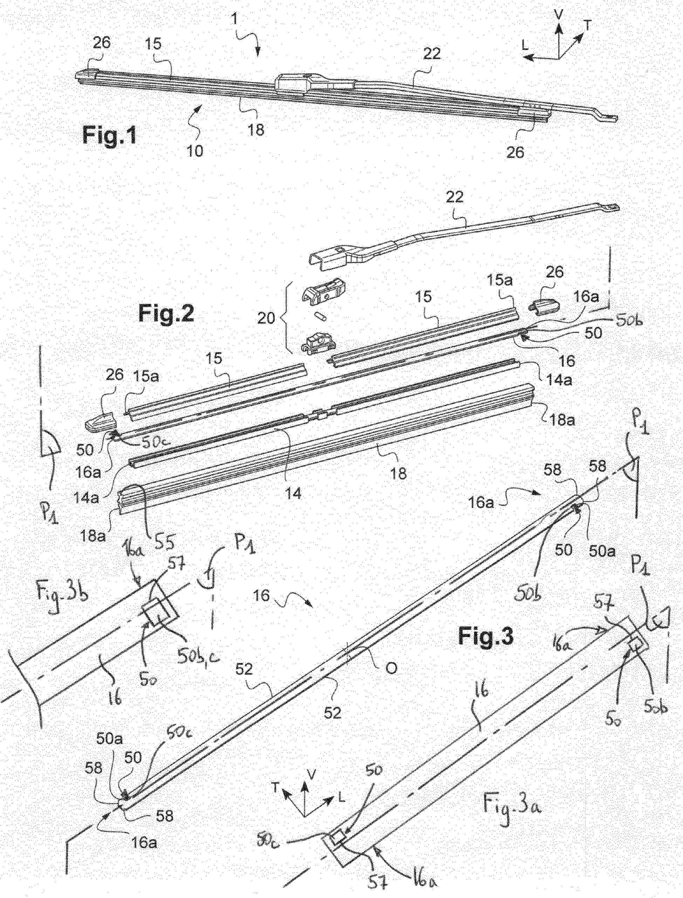

Dans la suite de la description, on adoptera à titre non limitatif des directions longitudinale, verticale et transversale indiquées sur la figure 1 par le trièdre (L, V, T) fixe par rapport à la lame d'essuyage 1. La direction longitudinale L correspond à la direction principale de la lame d'essuyage. Dans la description qui va suivre, des éléments identiques ou similaires seront désignés par les mêmes chiffres de référence.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées pour fournir d'autres réalisations.

On a représenté sur la figure 1 un essuie-glace 1 de véhicule automobile qui comporte un bras d'entrainement 22 à l'extrémité libre duquel est monté articulé un balai d'essuie-glace 10.

Le balai d'essuie-glace 10 est un balai du type balai plat ("flat blade" en anglais), c'est-à-dire avec un moyen de connexion qui s'attache en un point central du balai d'essuie-glace. Il est ici d'orientation principale longitudinale.

Comme on peut le voir à la figure 2, le balai d'essuie-glace 10 comporte un support dont un exemple de réalisation est une monture de support 14. La description ci-dessous est faite en rapport à cet exemple de réalisation, mais il est entendu que le support dans sa généralité peut se substituer à la monture de support.

Le balai d'essuie-glace, et donc l'élément de support élastique allongé, s'étend le long d'un plan longitudinal P1, médian en ce sens qu'il coupe en deux parties transversalement égales l'élément de support élastique allongé.

Le balai d'essuie-glace 10 comprend aussi une vertèbre de rigidification 16 longitudinale qui forme également un exemple de réalisation de l'élément de support élastique et allongé. Cet élément est élastique en ce sens qu'il est susceptible de reprendre une position de repos après avoir été soumis à un effort visant à courber l'élément. Il est également allongé en ce sens qu'il s'étend longitudinalement, sur la longueur du balai d'essuie-glace 10. Dans la description ci-dessous, les termes vertèbre de rigidification sont utilisés, mais ils pourront être substitués par l'expression élément de support élastique allongé, objet de l'invention.

Cette vertèbre de rigidification 16 peut être agencée dans la monture de support 14, qui forment un exemple de réalisation du support ou de la structure du balai 10 proprement dit.

La monture de support 14 porte un dispositif de connexion 20 de montage et d'articulation du balai d'essuie-glace 10 sur l'extrémité libre du bras d'entraînement 22 en pivotement et une lame d'essuyage 18 qui est réalisée en un matériau souple, et qui est apte à venir en contact avec le panneau vitré à essuyer.

La monture de support 14 comporte ou reçoit aussi un déflecteur d'air 15 qui est conformé aérodynamiquement pour que le vent relatif, qui est produit par le déplacement du véhicule, produise un effort tendant à plaquer le balai d'essuie-glace 10 sur le panneau vitré. Le déflecteur d'air 15 est par exemple formé en deux parties s'assemblant à la monture de support 14 de part et d'autre du dispositif de connexion 20. On notera que le déflecteur d'air 15 peut être rapporté par une opération mécanique sur la monture de support 14. Alternativement, la monture de support 14 et le déflecteur d'air 15 peuvent être co-moulés ou co-extrudés, de sorte qu'ils ne peuvent être séparés l'un de l'autre sans destruction de l'un ou l'autre de ces éléments.

La vertèbre de rigidification 16 est formée d'un corps en un seul tenant. Cette vertèbre de rigidification est une bande métallique qui est cintrée dans un plan perpendiculaire au plan du panneau vitré à essuyer, de manière que lorsque le balai d'essuie-glace 10 est en appui sur le panneau vitré, les efforts d'appui exercés par le bras d'entraînement 22 sont répartis sur toute la longueur de la lame d'essuyage 18.

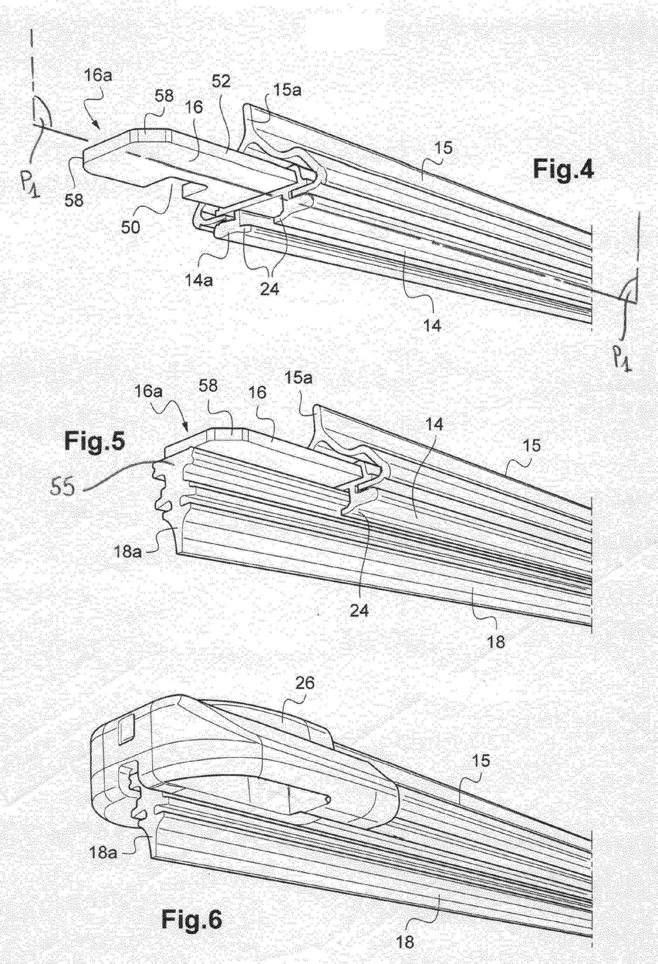

La vertèbre de rigidification 16 est également portée par la monture de support 14. A cet effet, et comme on peut mieux le voir sur la figure 4, la monture de support 14 comporte un conduit central longitudinal qui reçoit la vertèbre de rigidification 16.

Le conduit central longitudinal surmonte deux crochets inférieurs 24 en vis-à-vis, qui délimitent un conduit inférieur longitudinal ouvert vers le bas, dans lequel un talon 55 de la lame d'essuyage 18 est reçu. La vertèbre de rigidification 16 et la lame d'essuyage 18 sont introduites dans les conduits respectifs de la monture de support 14 selon un mouvement de coulissement longitudinal. Lorsque la vertèbre de rigidification 16 et la lame d'essuyage 18 sont en position montées dans la monture de support 14, leurs extrémités longitudinales 16a, 18a font saillie longitudinalement par rapport à l'extrémité longitudinale associée 14a de la monture de support 14, comme on peut le voir à la figure 5.

Chaque extrémité longitudinale du balai d'essuie-glace 10 porte un embout d'extrémité 26 qui réalise le blocage de la vertèbre de rigidification 16 et de la lame d'essuyage 18 dans un sens selon la direction longitudinale du balai, en bloquant le coulissement longitudinal dans un sens par rapport à la monture de support 14 et le déflecteur d'air 15, et qui permet d'améliorer l'aspect esthétique et aérodynamique global du balai d'essuie-glace 10 (figure 6).

L'embout d'extrémité 26 est par exemple en matériau polymère et peut être obtenu par moulage.

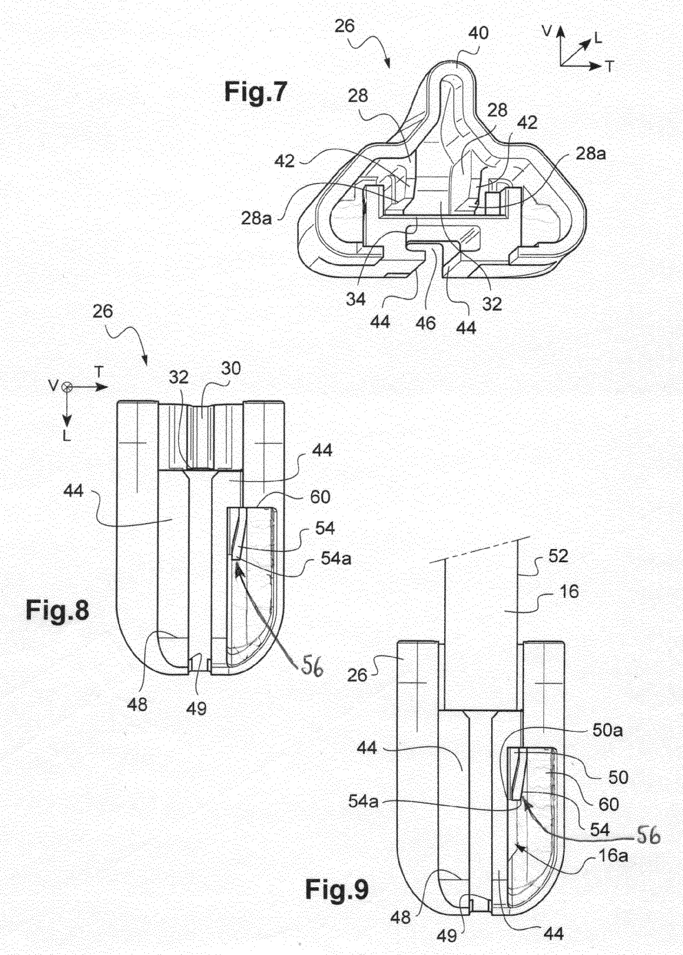

Comme on peut le voir plus en détails aux figures 7 et 8, chaque embout d'extrémité 26 délimite un corps creux dans lequel les extrémités longitudinales 14a, 16a de la monture de support 14 et de la vertèbre de rigidification 16 sont reçues.

Chaque corps creux comporte un logement de monture 30 dans lequel l'extrémité longitudinale 14a de la monture de support 14 et du déflecteur d'air 15 sont reçues. Le corps creux comprend encore un logement de vertèbre 32, s'étendant longitudinalement à l'arrière du logement de monture 30 et dans lequel l'extrémité longitudinale 16a de la vertèbre de rigidification 16 est reçue. Il s'agit ici du logement 32 recevant l'extrémité longitudinale 16a de l'élément de support 16.

Le logement de vertèbre 32 est notamment délimité par deux bords inférieurs de deux nervures 28, longitudinales, parallèles qui s'étendent depuis une paroi supérieure 40 du corps creux. L'extrémité 42 de chaque bord inférieur 28a des nervures 28 peut en outre être chanfreinée, pour faciliter l'introduction de la vertèbre de rigidification 16 dans le logement de vertèbre 32.

Chaque nervure 28 forme en outre une butée longitudinale de l'embout d'extrémité 26 contre l'extrémité longitudinale 15a du déflecteur d'air 15.

L'embout d'extrémité 26 comporte aussi deux crochets longitudinaux 44 qui s'étendent vers le bas depuis le fond 34 du logement de vertèbre 32, et qui sont recourbés transversalement vers l'intérieur, de manière à délimiter un logement inférieur 46 dans lequel le dos supérieur de la lame d'essuyage 18 est apte à être reçu.

L'embout d'extrémité 26 comporte également une première butée verticale transversale 48 qui obture une extrémité du logement de vertèbre 32 de manière à former une butée longitudinale de la vertèbre de rigidification 16. L'embout d'extrémité 26 comporte une deuxième butée verticale transversale 49 qui obture une extrémité du logement inférieur 46 de manière à former une butée longitudinale de la lame d'essuyage 18.

Ainsi, lorsque les deux embouts d'extrémité 26 sont montés aux deux extrémités longitudinales du balai d'essuie-glace 10, ils sont solidaires de la vertèbre de rigidification 16, et chaque embout d'extrémité 26 forme une butée de la monture de support 14, du déflecteur d'air 15 et de la lame d'essuyage 18 en coulissement longitudinal vers l'avant ou vers l'arrière, empêchant par conséquent la désolidarisation de la vertèbre de rigidification 16 et/ou de la lame d'essuyage 18 d'avec la monture de support 14.

Pour réaliser le blocage de la vertèbre de rigidification 16, et accessoirement de la lame d'essuyage 18, par rapport à la monture de support 14, l'embout d'extrémité 26 comporte un organe de verrouillage 56 qui coopère avec un moyen de verrouillage 50 ménagé à une extrémité de l'élément de support élastique allongé. Selon l'invention, il existe deux moyens de verrouillage 50 dont une première encoche référencée 50b est ménagée à une première extrémité longitudinale 16a de l'élément de support élastique allongé, et une deuxième encoche de verrouillage 50c est ménagée à une deuxième extrémité longitudinale 16a de l'élément de support élastique allongé, opposée à la première extrémité longitudinale par rapport au corps de l'élément de support élastique allongé.

Selon un mode de réalisation, le premier moyen de verrouillage et/ou le deuxième moyen de verrouillage est une encoche de verrouillage 50b, 50c portée par une extrémité longitudinale 16a de la vertèbre de rigidification 16 pour verrouiller l'extrémité longitudinale 16a de la vertèbre de rigidification 16 en position engagée dans le logement de vertèbre 32.

Comme on peut le voir à la figure 3, cette encoche de verrouillage 50c, 50b est réalisée dans un bord latéral 52, ou débouchante dans ce bord latéral 52, d'une extrémité longitudinale 16a de la vertèbre de rigidification 16, et s'étend transversalement vers l'intérieur de la vertèbre de rigidification 16.

De manière alternative représentée à la figure 3a, la ou les encoches de verrouillage 50b, 50c sont un trou délimité ou entouré par un bord circonférentiel fermé 57, pratiqué dans la vertèbre de rigidification 16.

La figure 3b illustre une autre possibilité de l'invention applicable au mode de réalisation où l'encoche de verrouillage 50b, 50c débouche au niveau du bord latéral 52 et au mode de réalisation où l'encoche de verrouillage 50b, 50c est délimité par le bord circonférentiel 57. Selon cette possibilité, l'encoche de verrouillage 50b, 50c est en intersection avec le plan longitudinal médian P1. En d'autres termes, l'encoche de verrouillage 50b, 50c est unique et s'étend majoritairement sur une demi-portion transversale de la vertèbre de rigidification 16, une partie de l'encoche de verrouillage 50b, 50c étant coupée ou traversée par le plan longitudinal médian P1.

Dans les cas décrit ci-dessus, le positionnement transversal et longitudinal de l'encoche de verrouillage 50b, 50c par rapport à l'élément de support élastique allongé 16 est identique aux deux extrémités longitudinales 16a de cet élément de support.

Chaque extrémité longitudinale 16a de la vertèbre de rigidification 16 comporte une seule et unique encoche de verrouillage 50b, 50c.

Les deux encoches de verrouillage 50b, 50c sont respectivement réalisées dans un bord latéral 52 opposé d'une extrémité longitudinale 16a du corps de la vertèbre de rigidification 16, comme on peut le voir à la figure 3, conférant à la vertèbre de rigidification 16 une symétrie centrale par rapport au centre O de la vertèbre de rigidification 16. Il en va de même pour le mode de réalisation avec encoche de verrouillage à périmètre fermé.

L'organe de verrouillage 56 de l'embout d'extrémité 26 fait saillie sur un côté du logement de vertèbre 32 pour coopérer avec une encoche de verrouillage 50b, 50c de la vertèbre de rigidification 16 pour verrouiller la vertèbre de rigidification 16 en position engagée dans le logement de vertèbre 32.

Comme on peut le voir sur la figure 9, l'organe de verrouillage 56 de l'embout d'extrémité 26 comporte par exemple une languette élastique 54 qui s'étend sensiblement longitudinalement et qui est recourbée vers l'intérieur du logement de vertèbre 32 dans un plan perpendiculaire, ou sensiblement perpendiculaire, au plan longitudinal médian P1, de manière que l'extrémité libre 54a de la languette élastique 54 soit apte à être reçue dans l'encoche de verrouillage 50b, 50c associée de la vertèbre de rigidification 16.

La languette élastique 54 est apte à se déformer élastiquement vers l'extérieur du logement de vertèbre 32 lors de l'introduction de l'extrémité longitudinale 16a de la vertèbre de rigidification 16 dans le logement de vertèbre 32. La languette élastique 54 est réalisée dans une paroi latérale du logement de vertèbre 32, de manière que son extrémité libre 54a soit mobile transversalement lors de l'introduction de la vertèbre de rigidification 16 dans le logement de vertèbre 32.

Pour cela, l'extrémité libre 54a de la languette 54 s'appuie contre le bord latéral 52 de la vertèbre de rigidification 16. Ensuite, lorsque la vertèbre de rigidification 16 est en position montée dans le logement de vertèbre 32, l'encoche de verrouillage 50 est située au niveau de l'extrémité libre 54a de la languette élastique 54. La languette élastique 54 revient alors élastiquement vers sa configuration initiale, de manière que son extrémité libre 54a soit en vis-à-vis d'une face transversale 50a de l'encoche de verrouillage 50b, 50c. Lorsque la vertèbre de rigidification 16 a tendance à sortir du logement de vertèbre 32, la face transversale 50a de l'encoche de verrouillage 50b, 50c vient en butée contre l'extrémité libre 54a de la languette élastique 54.

De manière alternative, la languette élastique 54 est agencée pour se mouvoir et réaliser sa fonction de blocage dans un plan parallèle, ou sensiblement parallèle, au plan longitudinal médian P1. Au lieu de bouger transversalement vers le bord latéral 52 de la vertèbre de rigidification 16, la languette élastique 54 bouge vers une grande face longitudinale délimitant ladite vertèbre.

L'embout d'extrémité 26 est ainsi réalisé de manière à pouvoir être monté indifféremment sur l'une ou l'autre des extrémités longitudinales 10a du balai d'essuie-glace 10.

Pour aider à l'insertion de la vertèbre de rigidification 16 dans le logement de vertèbre 32 de l'embout d'extrémité 26, chaque extrémité longitudinale 16a de la vertèbre de rigidification 16 peut comporter des chanfreins 58, par exemple deux.

Les chanfreins 58 des extrémités longitudinales 16a de la vertèbre de rigidification 16 favorisent également la déformation transversale de la languette élastique 54 vers l'extérieur lors de l'insertion de l'extrémité longitudinale 16a, le chanfrein 58 formant une rampe sur laquelle l'extrémité libre 54a de la languette élastique 54 s'appuie.

L'organe de verrouillage de l'embout d'extrémité 26 peut être débrayable, pour permettre le démontage de l'embout d'extrémité 26 d'avec l'extrémité longitudinale 10a du balai d'essuie-glace 10. Cela permet notamment de démonter la lame d'essuyage 18 hors de la monture de support 14, lorsque celle-ci est usée, pour la remplacer par une lame d'essuyage 18 neuve.

Pour cela, l'embout d'extrémité 26 est réalisé pour permettre le passage d'un outil, tel qu'un tournevis, en vue de provoquer une déformation de la languette élastique 54 qui coopère avec l'encoche de verrouillage, pour sortir l'extrémité libre 54a de la languette élastique 54 hors de l'encoche de verrouillage 50b, 50c. L'extrémité longitudinale 16a de la vertèbre de rigidification 16 n'est alors plus bloquée par la languette élastique 54, et elle peut alors sortir du logement de vertèbre 32.

Comme on peut le voir aux figures 8 et 9, le logement de vertèbre 32 peut être ouvert vers le bas, au niveau de la languette élastique 54. Le fond du logement de vertèbre 32 comporte ainsi une ouverture 60 agencée au droit de la languette élastique 54. De plus, pour que les crochets longitudinaux 44 ne gênent pas l'accès à la languette élastique 54, l'ouverture 60 est agencée transversalement à côté des crochets longitudinaux 44, comme on peut le voir aux figures 8 et 9.

L'embout d'extrémité 26 peut ainsi présenter un unique organe de verrouillage et être monté indifféremment sur l'une ou l'autre des deux extrémités 16a de la vertèbre de rigidification 16. L'embout d'extrémité 26 est ainsi le même pour les deux extrémités longitudinales 10a du balai d'essuie-glace 10.

Des embouts d'extrémité 26 identiques qui peuvent être montés sur une extrémité longitudinale 10a quelconque du balai d'essuie-glace 10, réduit le nombre d'appareillages utilisés pour réaliser les composants du balai d'essuie-glace 10. De plus, un embout d'extrémité 26 présentant un unique organe de verrouillage est plus simple à réaliser et donc moins coûteux qu'un embout de l'art antérieur ayant des moyens de verrouillage symétriques.

## Revendications

1. Elément de support élastique allongé (16) pour balai d'essuie-glace (10) destiné à être inséré dans un support (14) de balai d'essuie-glace (10), l'élément de support élastique allongé (16) étant formé d'un seul tenant entre deux extrémités longitudinales (16a) et par lequel passe un plan longitudinal médian (P1), l'élément de support élastique allongé (16) comprenant des moyens de verrouillage (50) chacun destiné à coopérer avec un organe de verrouillage (56) complémentaire porté par le balai d'essuie-glace (10) et dont au moins un moyen de verrouillage (50) est ménagé à chaque extrémité longitudinale (16a) de l'élément de support élastique allongé (16), **caractérisé en ce que** les moyens de verrouillage (50) comprennent une unique encoche de verrouillage (50) par extrémité longitudinale (16a), une première encoche de verrouillage (50b) s'étendant d'un côté du plan longitudinal médian (P1) et une deuxième encoche de verrouillage (50c) s'étendant de l'autre côté du plan longitudinal médian (P1).

2. Elément de support (16) selon la revendication 1, dans lequel le positionnement des encoches de verrouillage (50b, 50c) confère à l'élément de support élastique allongé (16) une symétrie centrale par rapport à un centre (O) de l'élément de support élastique allongé (16).

3. Elément de support (16) selon la revendication 1 ou 2, dans lequel au moins une des encoches de verrouillage (50b, 50c) est ménagée sur un des bords latéraux (52) délimitant l'élément de support élastique allongé.

4. Elément de support (16) selon la revendication 1 ou 2, dans lequel au moins une des encoches de verrouillage (50b, 50c) est délimitée par un bord circonférentiel fermé (57).

5. Elément de support (16) selon la revendication 1 ou 2, dans lequel au moins une des encoches de verrouillage (50b, 50c) est en intersection avec le plan longitudinal médian (P1).

6. Elément de support (16) selon l'une quelconque des revendications précédentes, dans lequel les extrémités longitudinales (16a) de l'élément de support élastique allongé (16) sont chanfreinées.

7. Balai d'essuie-glace (10) **caractérisé en ce qu'**il comporte un élément de support élastique allongé (16) selon l'une des revendications précédentes.

8. Balai d'essuie-glace (10) selon la revendication précédente, dans lequel est prévu au moins un embout d'extrémité (26) porteur de l'organe de verrouillage (56) complémentaire du moyen de verrouillage (50) ménagé sur l'élément de support élastique allongé (16).

9. Balai d'essuie-glace (10) selon la revendication 8, dans lequel l'embout d'extrémité (26) comporte un logement (32) recevant l'extrémité longitudinale (16a) de l'élément de support (16), l'organe de verrouillage (56) faisant saillie sur un côté du logement (32) pour coopérer avec l'encoche de verrouillage (50) de l'élément de support (16) pour verrouiller cet élément de support (16) en position engagée dans le logement (32).

10. Balai d'essuie-glace (10) selon la revendication précédente, dans lequel l'organe de verrouillage (56) de l'embout d'extrémité (26) comporte une unique languette élastique (54).

11. Balai d'essuie-glace (10) selon la revendication précédente, dans lequel la languette élastique (54) est configurée pour se déplacer dans un plan sensiblement perpendiculaire au plan longitudinal médian (P1).

12. Balai d'essuie-glace (10) selon la revendication 10, dans lequel la languette élastique (54) est configurée pour se déplacer dans un plan sensiblement parallèle au plan longitudinal médian (P1).

13. Balai d'essuie-glace (10) selon l'une quelconque des revendications 8 à 12, **caractérisé en ce que** le logement (32) de l'embout d'extrémité (26) comporte une ouverture (60) ménagée au droit de l'organe de verrouillage.

14. Balai d'essuie-glace (10) selon l'une des revendications 7 à 13, comprenant deux embouts d'extrémité (26) chacun rapporté à une extrémité longitudinale (16a) de l'élément de support (16), les embouts d'extrémité (26) étant de conception identique.

15. Essuie-glace (1) **caractérisé en ce qu'**il comporte un balai d'essuie-glace (10) selon l'une quelconque des revendications 7 à 14 et un bras d'actionnement (22) pour entrainer le balai d'essuie-glace (10) en pivotement.

## Patentansprüche

1. Längliches elastisches Halteelement (16) für ein Scheibenwischerblatt (10), das zur Einführung in einen Träger (14) eines Scheibenwischerblatts (10) bestimmt ist, wobei das längliche elastische Halteelement (16) einstückig zwischen zwei Längsenden (16a) gebildet ist und eine Längsmedianebene (P1) durch dieses verläuft, wobei das längliche elastische Halteelement (16) Verriegelungsmittel (50) umfasst, von denen jedes dazu bestimmt ist, mit einem vom Scheibenwischerblatt (10) getragenen komplementären Verriegelungsglied (56) zusammenzuwirken und von denen mindestens ein Verriegelungsmittel (50) an jedem Längsende (16a) des länglichen elastischen Halteelements (16) bereitgestellt ist, **dadurch gekennzeichnet, dass** die Verriegelungsmittel (50) eine einzige Verriegelungsaussparung (50) je Längsende (16a) umfassen, wobei sich eine erste Verriegelungsaussparung (50b) auf einer Seite der Längsmedianebene (P1) erstreckt und sich eine zweite Verriegelungsaussparung (50c) auf der anderen Seite der Längsmedianebene (P1) erstreckt.

2. Halteelement (16) nach Anspruch 1, wobei die Positionierung der Verriegelungsaussparungen (50b, 50c) dem länglichen elastischen Halteelement (16) eine Zentralsymmetrie relativ zu einer Mitte (O) des länglichen elastischen Halteelements (16) verleiht.

3. Halteelement (16) nach Anspruch 1 oder 2, wobei mindestens eine der Verriegelungsaussparungen (50b, 50c) an einem der Seitenränder (52) bereitgestellt ist, die das längliche elastische Halteelement begrenzen.

4. Halteelement (16) nach Anspruch 1 oder 2, wobei mindestens eine der Verriegelungsaussparungen (50b, 50c) von einem geschlossenen Umfangsrand (57) begrenzt ist.

5. Halteelement (16) nach Anspruch 1 oder 2, wobei mindestens eine der Verriegelungsaussparungen (50b, 50c) die Längsmedianebene (P1) schneidet.

6. Halteelement (16) nach einem der vorhergehenden Ansprüche, wobei die Längsenden (16a) des länglichen elastischen Halteelements (16) abgeschrägt sind.

7. Scheibenwischerblatt (10), **dadurch gekennzeichnet, dass** es ein längliches elastisches Halteelement (16) nach einem der vorhergehenden Ansprüche umfasst.

8. Scheibenwischerblatt (10) nach dem vorhergehenden Anspruch, wobei mindestens ein Endstück (26) vorgesehen ist, das Träger des Verriegelungselements (56) ist, das komplementär zu dem am länglichen elastischen Halteelement (16) bereitgestellten Verriegelungsmittel (50) ist.

9. Scheibenwischerblatt (10) nach Anspruch 8, wobei das Endstück (26) eine Aufnahme (32) umfasst, die das Längsende (16a) des Halteelements (16) aufnimmt, wobei das Verriegelungselement (56) auf einer Seite der Aufnahme (32) übersteht, um mit der Verriegelungsaussparung (50) des Halteelements (16) zusammenzuwirken, um dieses Halteelement (16) in einer Position in Eingriff mit der Aufnahme (32) zu verriegeln.

10. Scheibenwischerblatt (10) nach dem vorhergehenden Anspruch, wobei das Verriegelungselement (56) des Endstücks (26) eine einzige elastische Lasche (54) umfasst.

11. Scheibenwischerblatt (10) nach dem vorhergehenden Anspruch, wobei die elastische Lasche (54) dazu ausgeführt ist, sich in einer Ebene zu bewegen, die im Wesentlichen senkrecht zur Längsmedianebene (P1) ist.

12. Scheibenwischerblatt (10) nach Anspruch 10, wobei die elastische Lasche (54) dazu ausgeführt ist, sich in einer Ebene zu bewegen, die im Wesentlichen parallel zur Längsmedianebene (P1) ist.

13. Scheibenwischerblatt (10) nach einem der Ansprüche 8 bis 12, **dadurch gekennzeichnet, dass** die Aufnahme (32) des Endstücks (26) eine Öffnung (60) umfasst, die im Bereich des Verriegelungsglieds bereitgestellt ist.

14. Scheibenwischerblatt (10) nach einem der Ansprüche 7 bis 13, umfassend zwei Endstücke (26), die jeweils an einem Längsende (16a) des Halteelements (16) angefügt sind, wobei die Endstücke (26) identischer Ausführung sind.

15. Scheibenwischer (1), **dadurch gekennzeichnet, dass** er ein Scheibenwischerblatt (10) nach einem der Ansprüche 7 bis 14 und einen Betätigungsarm (22) zum Schwenkantrieb des Scheibenwischerblatts (10) umfasst.

## Claims

1. Elongated elastic support element (16) for a wiper blade (10) intended to be inserted in a support (14) for a wiper blade (10), the elongated elastic support element (16) being formed integrally between two longitudinal ends (16a) and through which passes a median longitudinal plane (P1), the elongated elastic support element (16) comprising locking means (50) each intended to cooperate with a complementary locking member (56) carried by the wiper blade (10) and of which at least one locking means (50) is arranged at each longitudinal end (16a) of the elongated elastic support element (16), **characterized in that** the locking means (50) comprise a single locking notch (50) per longitudinal end (16a), a first locking notch (50b) extending from one side of the median longitudinal plane (P1) and a second locking notch (50c) extending from the other side of the median longitudinal plane (P1).

2. Support element (16) according to Claim 1, wherein the positioning of the locking notches (50b, 50c) gives the elongated elastic support element (16) a central symmetry relative to a centre (O) of the elongated elastic support element (16).

3. Support element (16) according to Claim 1 or 2, wherein at least one of the locking notches (50b, 50c) is arranged on one of the lateral edges (52) delimiting the elongated elastic support element.

4. Support element (16) according to Claim 1 or 2, wherein at least one of the locking notches (50b, 50c) is delimited by a closed circumferential edge (57).

5. Support element (16) according to Claim 1 or 2, wherein at least one of the locking notches (50b, 50c) intersects with the median longitudinal plane (P1).

6. Support element (16) according to any one of the preceding claims, wherein the longitudinal ends (16a) of the elongated elastic support element (16) are chamfered.

7. Wiper blade (10), **characterized in that** it comprises an elongated elastic support element (16) according to one of the preceding claims.

8. Wiper blade (10) according to the preceding claim, wherein at least one end sleeve (26) is provided which carries the complementary locking member (56) of the locking means (50) arranged on the elongated elastic support element (16).

9. Wiper blade (10) according to Claim 8, wherein the end sleeve (26) comprises a housing (32) receiving the longitudinal end (16a) of the support element (16), the locking member (56) protruding from a side of the housing (32) to cooperate with the locking notch (50) of the support element (16) in order to lock this support element (16) in the position engaged in the housing (32).

10. Wiper blade (10) according to the preceding claim, wherein the locking member (56) of the end sleeve (26) comprises a single elastic tab (54).

11. Wiper blade (10) according to the preceding claim, wherein the elastic tab (54) is conFigure d to move in a plane substantially perpendicular to the median longitudinal plane (P1).

12. Wiper blade (10) according to Claim 10, wherein the elastic tab (54) is conFigure d to move in a plane substantially parallel to the median longitudinal plane (P1).

13. Wiper blade (10) according to any one of Claims 8 to 12, **characterized in that** the housing (32) of the end sleeve (26) comprises an opening (60) arranged level with the locking member.

14. Wiper blade (10) according to one of Claims 7 to 13, comprising two end sleeves (26) each attached to a longitudinal end (16a) of the support element (16), the end sleeves (26) being identical in design.

15. Windscreen wiper (1), **characterized in that** it comprises a wiper blade (10) according to any one of Claims 7 to 14 and an actuating arm (22) to drive the wiper blade (10) in a pivoting movement.
